Europäisches Patentamt

European Patent Office

Office européen des brevets

(19)

(11) Veröffentlichungsnummer: **0 202 393**
**B1**

(12) **EUROPÄISCHE PATENTSCHRIFT**

(45) Veröffentlichungstag der Patentschrift: **09.05.90**

(21) Anmeldenummer: **86101635.0**

(22) Anmeldetag: **08.02.86**

(51) Int. Cl.⁵: **C 09 D 177/00,** C 08 L 77/00, C 08 K 3/20

(54) **Verfahren zur Herstellung von mit Titandioxid pigmentierten pulverförmigen Beschichtungsmitteln auf der Basis von Polyamiden.**

(30) Priorität: **23.03.85 DE 3510687**

(43) Veröffentlichungstag der Anmeldung:
**26.11.86 Patentblatt 86/48**

(45) Bekanntmachung des Hinweises auf die
Patenterteilung:
**09.05.90 Patentblatt 90/19**

(84) Benannte Vertragsstaaten:
**AT BE CH DE FR GB IT LI NL SE**

(56) Entgegenhaltungen:
**DE-A-1 266 443**
**GB-A-1 311 526**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Mumcu, Salih, Dr.**
**Leverkusener Strasse 12**
**D-4370 Marl (DE)**
Erfinder: **Aurich, Hans-Peter, Dr.**
**Im Wienäckern 60a**
**D-4358 Haltern (DE)**
Erfinder: **Winzer, Helmut**
**Mühlenschlade 31**
**D-5950 Finnentrop (DE)**

Courier Press, Leamington Spa, England.

EP 0 202 393 B1

## Beschreibung

Gegenstand der Erfindung ist ein Verfahren zur Herstellung von mit Titandioxid pigmentierten pulverförmigen Beschichtungsmitteln auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren.

Es ist bekannt, pulverförmige Beschichtungsmittel auf Basis von Polyamiden zur Herstellung lackähnlicher Überzüge von Metallen einzusetzen. Die Beschichtung erfolgt nach dem Schmelzüberzugsverfahren, d.h. nach dem Wirbelsinterverfahren, dem Flammspritzverfahren oder nach dem elektrostatischen Beschichtungsverfahren. Die Polyamidpulver werden erhalten durch Fällen des Polyamids aus Lösungen (am 10.05.51 ausgelegte Unterlagen der deutschen Patentanmeldung S 2 80 5/39 b 22/04 oder Äquivalente FR—A—989 062) oder durch Mahlen des Polyamidgranulates, vorzugsweise bei tiefen Temperaturen unter einer Inertgasatmosphäre.

Das Fällungsverfahren der vorgenannten französischen Patentschrift beschreibt das Ausfällen von Polyamidpulvern aus Ethanol durch Abkühlen der heißen Polyamidlösung durch äußere Einwirkung oder durch Abkühlenlassen. Allein durch Abkühlen bzw. Abkühlenlassen der heißen Polyamidlösung werden Pulver mit hohem Feinkornanteil erhalten, die zu Staubauswurf und Qualmen im Wirbelbett führen. Schließlich treten bei einer solchen Arbeitsweise unerwünschte Agglomerate auf, die anschließend durch Zerreiben oder Zermahlen in die erforderliche Pulvergröße überführt werden müssen. Außerdem werden bei einem solchen Verfahren nicht reproduzierbare, d.h. unterschiedliche Chargen erhalten.

Es ist ferner bekannt, Polyamidpulver herzustellen, indem man niedermolekulare Polyamide mahlt und die so erhaltenen Pulver anschließend auf die gewünschte Viskosität bringt, indem man sie in an sich bekannter Weise auf Temperaturen unterhalb des Schmelzpunktes erhitzt (britische Patentschrift 535 138, deutsche Offenlegungsschrift 1 570 392).

Auch Polylaurinlactampulver werden nach diesen bekannten Verfahren hergestellt und nach den ebenfalls bekannten Verfahren zum Beschichten eingesetzt (Chem. Ind. November 1968, S. 783 bis 791; Modern Plastics, Februar 1966, S. 153 bis 156). Da Polylaurinlactampulver nicht immer den geforderten Bedingungen hoher Elastizität, guter Kantenbeschichtung, glatter Oberfläche, Beständigkeit gegenüber alkalischen wäßrigen Lösungen genügen und vielfach bei der Verarbeitung insbesondere zum Qualmen neigen, sind die verschiedenartigsten Verbesserungen bekanntgeworden, wie weichmacherhaltige Polylaurinlactampulver (deutsche Auslegeschrift 1 669 821), solche aus einem Gemisch aus Homopolyaurinlactam und laurinlactamhaltigen Copolyamiden (deutsche Auslegeschrift 2 144 606), solche, die N-alkoximethylgruppenhaltige Polyamide neben sauer reagierenden Katalysatoren enthalten (deutsche Offenlegungsschrift 2 222 122), oder Gemische aus Polyamiden mit 8 bis 11 aliphatisch gebundenen Kohlenstoffatomen pro Carbonamidgruppe, alkoxialkylgruppentragenden Aminoplasten und sauer reagierden Katalysatoren (deutsche Offenlegungsschrift 2 222 123). Diese Pulver zeigen in einzelnen Fällen gute Eigenschaften, genügen jedoch noch nicht voll allen geforderten Bedingungen.

Ein verbessertes Verfahren wird in der deutschen Auslegeschrift 2 545 267 beschrieben. Dieses Verfahren befriedigt insofern noch nicht vollständig, da zur Herstellung von pigmentfreien Pulvern ein Mahlverfahren angewendet und zur Herstellung von pigmentierten Pulvern das Fällungsverfahren betrieben werden muß. Schleißlich ist für das Gelingen diese Verfahrens Voraussetzung, Polylaurinlactamgranulate einzusetzen, welche ausschließlich durch hydrolytische Polymerisation in Gegenwart bestimmter Mengen Phosphorsäure hergestellt worden sind.

Ein wesentlich verbessertes Verfahren wird in der DE—B—29 06 647 bzw. der äquivalenten EP—B1—14 772 beschrieben.

Diese Arbeitsweise bedarf einerseits einer Verbesserung, insbesondere insichtlich der Verkürzung des Ablaufs des Fällverfahrens. Eine solche Verbesserung wird in der deutschen Patentanmeldung P 35 10 691.3 vom 23.03.85 vorgeschlagen. Andererseits besitzen pigmentierte pulverförmige Beschichtungsmittel noch Nachteile, die verbesserungswürdig sind.

Pigmenthaltige Pulver, insbesondere solche, die Titandioxidpigmente enthalten, ergeben vielfach niedrige Schüttdichten von 300 bis 400 g/l. Die Schüttdichte von Beschichtungspulvern, insbesondere solchen, die nach dem Wirbelsinterverfahren verwendet werden, sollte aber overhalb 400 g/l, insbesondere im Bereich von 500 bis 700 g/l liegen.

Derartige Wirbelsinterpulver besitzen im allgemeinen eine Korngröße im Bereich von 40 bis 250 µm. Eine niedrige Schüttdichte hat bekanntlich den Nachteil, daß das überschüssige Pulver von dem beschichteten Gegenstand nicht oder sehr schlecht abrieselt, so daß der Überzug ungleichmäßig wird. Der Zusatz von antistatischen Mitteln kann diesen Mangel nicht beheben, abgesehen davon, daß damit andere Nachteile erkauft werden. Diese niedrige Schüttdichte wird im allgemeinen dadurch verursacht, daß die Beschichtungspulver eine poröse Struktur besitzen.

Schließlich führen die bekannten Fällverfahren dazu, daß die Korngrößenverteilung der Pulver sich beim Trockenprozeß verändert. Insbesondere dann, wenn eine Verschiebung zu kleinen Korngrößen auftritt, wird der Feinstkornanteil, das sind Körner mit einer Korngröße <10 µm, vergrößert. Wegen dieses Staubanteils wird eine nachträgliche Sichtung der Pulver unumgänglich, was naturgemäß einen zusätzlichen aufwendigen Aufarbeitungsschritt erfordert.

Aufgabe der Erfindung ist es daher, ein Verfahren bereitzustellen, das zu Beschichtungsmitteln führt, welche die bekannt guten Eigenschaften, wie gute Elastizität und ausgezeichnete Beständigkeit gegenüber wäßrigen alkalischen Lösungen besitzen und darüber hinaus jedoch die aufgezeigten Nachteile, wie niedrige Schüttdichte bzw. Porosität sowie hohen Feinkornanteil nicht aufweisen.

Die Lösung der Aufgabe gelingt durch das Verfahren wie in den Ansprüchen angegeben.

Die Nukleierwirkung des Titandioxidpigmentes wird nach folgender Methode bestimmt:

Es wird ein zu einem Kalorimeter umgebauter 5 1-Autoklav, der mit einem Blattrührer ausgerüstet ist, verwendet. Der Blattrührer hat einem Durchmesser von der Hälfte des Durchmessers des Autoklav. Eine geeignete Apparatur ist in Chem. Ing. Technik 51 (1979), Nr. 8, Seite 823, beschrieben. Der Autoklav wird gefüllt mit einer Mischung aus 2 400 g Ethanol (vergällt mit Methylethylketon, Wassergehalt 1 Gewichtsprozent), 400 g Polyamidgranulat und 32 g Titandioxidpigment. Das Polyamid wird unter Rühren bei 150 Umdrehungen pro Minute innerhalb einer Stunde bei 145°C gelöst. Anschließend wird das Umpumpen des Heizmediums im Mantel abgestellt und die Innentemperatur durch Abdestillieren des Ethanols in eine externe Vorlage mit einer Geschwindigkeit von 60°C pro Stunde bis 110°C herabgesetzt. Dann wird die Destillation abgestellt und die Innentemperatur nicht mehr geregelt. Die Fällung erfolgt innerhalb 30 Minuten. Das auftretende Maximum der Innentemperatur wird festgehalten ($T_{max\ p}$).

In gleicher Weise wird die auftretende maximale Innentemperatur festgehalten bei Abwesenheit des Titandioxidpigmentes ($T_o$), doch in Gegenwart des gleichen pigmentfreien Polyamids. Die Differenz $\Delta = T_{max\ p} - T_o$ stellt ein Maß für die Nukleierwirkung des Pigmentes dar. Je größer die Nukleierwirkung des Pigmentes, desto größer ist auch die Temperaturdifferenz. Geeignete Pigmente sind solche mit schwacher Nukleierwirkung, das sind solche mit $\Delta T \leq 3°C$.

Einsetzbare Polyamide für das Verfahren sind demnach Polyundecansäureamid, Polylaurinlactam (11 aliphatisch gebundene Kohlenstoffatome pro Carbonamidgruppe) und Polyamide mit mehr als 11 aliphatisch gebundenen Kohlenstoffatomen pro Carbonamidgruppe, vorzugsweise Polylaurinlactam. Außerdem können die entsprechenden Copolyamide eingesetzt oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, 2-Methylpentadiamin-(1,5), Octamethylendiamin-(1,8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- oder Copolyamide werden als Granulate oder Schrot eingesetzt, die eine relative Lösungsviskosität zwischen 1,4 und 1,8 (gemessen in 0,5% m-Kressollösung bei 25°C) besitzen.

Die Polyamide können durch Polykondensation, hydrolytische oder acidolytische Polymerisation oder auch durch aktivierte anionische Polymerisation nach bekannten Verfahren hergestellt werden. Sie können in der Molmasse geregelt oder ungeregelt hergestellt worden sein, d.h. in Abwesenheit jeglicher Kettenstabilisatoren, wie Essigsäure, Benzoesäure, Adipinsäure, Azelainsäure, Sebazinsäure, Dodecandisäure.

Die Polyamide können vorteilhaft bis zu 1 Gewichtsprozent Phosphorsäure enthalten.

Bei dem eigentlichen Fällverfahren kann das Titandioxidpigment vor oder während der Fällung zugesetzt werden. Vorteilhaft wird es als ethanolische Suspension dem Ethanol-Polyamid-Gemisch zugesetzt. Es Können demnach auch Polyamidgranulate im Fällverfahren einsetzt werden, welche bereits das Titandioxidpigment enthalten, d.h. solche, denen das Pigment im Extruder vor oder bei der Herstellung des Polyamids zugegeben worden war.

Besonders vorteilhaft läßt sich das Verfahren besonders bei dem verbesserten Fällverfahren anwenden, wie es in der deutschen Patentanmeldung P 35 10 691.3 beschrieben ist.

Im folgenden soll dieses Verfahren nochmals beschrieben werden.

Man kühlt die bei 140 bis 150°C hergestellte Lösung des Polyamids in Ethanol mit mindestens 10°C/h unter Abdestillieren von Ethanol rasch bis zu Sättigungsgrenze (ca. 125°C) ab und stellt die Manteltemperatur in der anschließenden weiteren Abkühlung bis zur Fällungstemperatur im Bereich von 90 bis 113°C unter weiterem Abdestillieren von Ethanol im Gleichschritt mit der Temperatur der Lösung derart ein, daß die Manteltemperatur maximal 3°C tiefer als die Innentemperatur liegt und schließlich hält man die Lösung in der anschließenden Fällungsphase durch weiteres Abdestillieren von Ethanol isotherm.

Geeignete Titandioxidpigmente sind solche, die auf die Kristallisation des Polyamids nicht oder nur schwach einwirken, d.h. schwache Nukleierwirkung zeigen. Die Korngröße soll <10 µm, vorzugsweise <2 µm betragen. Sie können nicht ausgerüstet sein oder auch hydrophil oder hydrophob ausgerüstet sein.

Vorteilhaft wird die Rutilmodifikation eingesetzt. Die Anatasmodifikation kann zwar grundsätzlich verwendet werden, ist jedoch weniger geeignet. Die Pigmente werden in Mengen von 1—30, insbesondere in Mengen von 2—20 Gewitchtsprozent, bezogen auf das Polyamid, verwendet.

Nach dem Verfahren der Erfindung gelingt es wahlweise, sowohl Wirbelsinterpulver als auch Elektrostatikpulver herzustellen. Die Fällpulver haben hohe Schüttdichten je nach ihrem $TiO_2$-Gehalt zwischen 400 und 700 g/l. Sie zeigen bei der Beschichtung von Metallen ausgezeichnete Eigenschaften hinsichtlich Abrieselverhalten vom Substrat, Bläschenniveau, Dehnbarkeit und Katenbeschichtung, als auch Beständigkeit gegenüber alkalischen wäßrigen Lösungen. Das erfindungsgemäße Wirbelsinterpulver enthält im Bereich 0—10 µm keine Anteile, so daß es im Wirbelbad nicht staubt. Damit erübrigt sich die Sichtung des Pulvers völlig.

Die Fällung kann auch in Gegenwart von Ruß, $BaSO_4$, ZnS, Cadmiumrot, Eisenoxid und Stabilisatoren,

EP 0 202 393 B1

wie 4-Hydroxy-3,5-di-tert.-butylphenyl-propionsäure, 4-Hydroxy-3,5-di-tert.-butylphenyl-propionsäure-hexamethylendiamin-bisamid, -propionsäureester mit einem aliphatischen Alkohol mit 1 bis 18 C-Atomen, Tris-alkylphenyl-, Tris-alkyl-, Tris-aryl- oder gemischten Estern der phosphorigen Säure, deren Alkylrest 1 bis 16 C-Atome enthält und geradkettig oder verzweigt ist, oder in Gegenwart von Tensiden vorgenommen werden.

### Beispiel 1

400 kg in Gegenwart von 0,5 Gew.-% Phosphorsäure hergestelltes Polyamid 12 mit einem Extraktgehalt von 0,6 Gew.-% und einer relativen Lösungsviskosität von 1,60 werden zusammen mit 2 000 l mit Methylethylketon vergälltem Ethanol mit einem Wassergehalt von 1 Gew.-% und 32 kg $TiO_2$-Pigment ($\Delta T$ 1,2°C), suspendiert in 500 l Ethanol, in einem 3 $m^3$-Reaktor (d = 1 600 mm) auf 145°C aufgeheizt. Anschließend wird die Manteltemperatur auf 124°C gestellt und die Lösung bei der Rührerdrehzahl (Blattrührer, d = 800 mm) 50 Upm durch Destillation des Ethanols in eine externe Vorlage mit einer mittleren Geschwindigkeit von 22°C pro Stunde abgekühlt. Ab der Innentemperatur 125°C wird die Manteltemperatur so geregelt, daß sie nicht mehr als 3°C unter der Innentemperatur liegt.

Bei der Innentemperatur 110°C beginnt die Fällung, welche sich durch einen Anstieg der Innentemperatur bemerkbar macht. Zu Beginn dieser Fällungsphase wird die Rührerdrehzahl auf 70 Upm erhöht und die Destillationsleistung so weit gesteigert, daß die Innentemperatur bis zum Fällungsende, welches sich durch stark Abnahme der Innentemperatur deutlich macht, bei 110 $\pm$ 0,3°C bleibt. Die Fällung dauert 18 Minuten (die abdestillierte Menge an Ethanol beträgt insgesamt 690 l). Anschließend wird die Destillation abgestellt un die entstandene Suspension über den Reaktormantel auf 45°C abgekühlt und in einem Schaufeltrockner bis auf eine Restfeuchte von 0,15 Gew.-% getrocknet.

Die mittels Luftstrahlsieb gemessene Korngrößenverteilung lautet

| | | |
|---|---|---|
| < 10 µm: | 0 | Gew.-% |
| < 40 µm: | 0.4 | Gew.-% |
| < 63 µm: | 7 | Gew.-% |
| <100 µm: | 55 | Gew.-% |
| <150 µm: | 95 | Gew.-% |
| <200 µm: | 99.9 | Gew.-% |
| Grobanteil >200 µm 0,1 Gew.-% | | |

Die Schüttdichte des Pulvers beträgt 550 g/l. Mit dem <200 µm-Anteil des Pulvers werden an 1 mm-Blechen, die zuvor in einem Umluftofen auf 380°C erhitzt wurden, 300 µm starke Wirbelsinterüberzüge hergestellt. Das Abrieselverhalten des überschüssigen Pulvers vom Substrat ist sehr gut. Die Überzugsoberfläche enthält keine Unregelmäßigkeiten. Beim Wirbeln des Pulvers entsteht kein Staub.

### Beispiel 2

Hierbei wird entsprechen dem Beispiel 2 verfahren, jedoch die Abkühlgeschwindigkeit auf 12°C pro Stunde eingestellt. Um von der Korngrößenverteilung her dem Beispiel 1 zu entsprechen, wird die Rührerdrehzahl in der Abkühlphase bei 35 Upm gehalten. Die Fällungszeit beträgt bei 113°C 1 Stunde und 40 Minuten.

### Beispiel 3

Hier wird wie beim Beispiel 1 verfahren, jedoch als Pigment hydrophob ausgerüstetes Titandioxid-pigment ($\Delta T$ = 0°C) eingesetzt.

### Beispiel 4

Es wird analog Beispiel 1 gearbeitet, jedoch wird ein Titandioxidpigment mit einer deutlichen Nukleierwirkung für Polyamidkristallisation ($\Delta T$ = 2,8°C) eingesetzt.

Die entsprechenden Bedingungen der Vergleichsversuche 1 bis 4 sowie deren Ergebnisse, als auch die Bedlingungen der Beispiele 1 bis 4 sind in der folgenden Tabelle zusammengefaßt.

4

## Tabelle

| | Einsatzstoffe | | Arbeitsweise bei der Fällung | | | | Pulver | | Eigenschaften der Beschichtung | | |
|---|---|---|---|---|---|---|---|---|---|---|---|
| | Polyamid-Typ | TiO2-Pigment Nukleierwirkung $\Delta T$ [°C] | Rührerdrehzahl [Upm] | Abkühlgeschwindigkeit [°C/h] | Fällungszeit | Fällungstemperatur [°C] | Feinstkornanteil <10 µm [Gew.-%] | Schüttdichte [g/l] | Abriebselverhalten | Staubnote | Schlagtiefung mm/7,6 kg |
| Beisp. 1 | Polyamid 12 mit 0,5 % $H_3PO_4$ | 1,2 | 50 | 22 | 18 min | 110 | 0 | 550 | sehr gut | sehr gut | > 1 800 |
| Beisp. 2 | " | 1,2 | 35 | 12 | 1 Std. 40 min | 113 | 0 | 500 | gut | sehr gut | > 1 800 |
| Beisp. 3 | " | 0 | 50 | 19 | 20 min | 109 | 0 | 560 | sehr gut | sehr gut | > 1 800 |
| Beisp. 4 | " | 2,8 | 50 | 22 | 12 min | 111 | 0 | 520 | gut | gut | > 1 800 |
| Vergl.-Beisp. 1 | " | 6,4 | 20 | 6 | 10 Std. | 116 | 1,1 | 330 | schlecht | schlecht | < 500 |
| Vergl.-Beisp. 2 | " | 4,0 | 50 | 19 | 8 min | 112 | 0,6 | 380 | " | " | < 1 000 |
| Vergl.-Beisp. 3 | " | 5,2 | 50 | 20 | 7 min | 113 | 0,5 | 360 | " | " | < 1 000 |
| Vergl.-Beisp. 4 | Polyamid 12 ($H_3PO_4$-frei) | 3,9 | 50 | 19 | 8 min | 112 | 0,7 | 360 | " | " | < 1 000 |

**Patentansprüche**

1. Verfahren zur Herstellung von mit Titandioxid pigmentierten Beschichtungspulvern auf der Basis von Polyamiden mit mindestens zehn aliphatisch gebundenen Kohlenstoffatomen pro Carbonamidgruppe oder Copolyamiden oder eine Mischung aus Homo- und Copolyamiden, welche mindestens 70% der genannten Bausteine enthalten nach dem Fällungsverfahren, dadurch gekennzeichnet, daß man Titandioxidpigmente ohne oder mit einer schwachen Nukleierungswirkung auf die Polyamidkristallisation einsetzt, wobei $\Delta T \leq 3°C$ ist

$[\Delta T = T_{max\ p} - T_o$

$T_{max\ p}$: maximale Temperatur während der Fällung in Gegenwart von $TiO_2$-Pigment

$T_o$: maximale Temperatur während der Fällung in Abwesenheit von $TiO_2$-Pigment

Meßverfahren gemäß Chem. Ing. Techn. *51*, 823 (1979)].

2. Verfahren zur Herstellung von Beschichtungspulvern nach Anspruch 1, dadurch gekennzeichnet, daß die heiße ethanolische Lösung unter Rühren und unter Abdestillieren von Ethanol unter Eigendruck rasch bis zur Sättigungsgrenze (ca. 125°C) abgekühlt wird und in der anschließenden weiteren Abkühlungsphase bis zum Einstellen der Fällungstemperatur im Bereich von 90 bis 113°C unter weiterem Abdestillieren von Ethanol die Manteltemperatur im Gleichschritt mit der Temperatur der Lösung engestellt wird, derart, daß die Manteltemperatur maximale 3°C tiefer liegt und schließlich in der anschließenden Fällungsphase durch weiteres Abdestillieren von Ethanol die Lösung isotherm gehalten wird.

3. Verwendung der nach den Ansprüchen 1 und 2 erhaltenen Beschichtungspulver als Beschichtungsmittel nach den Schmelzüberzugsverfahren.

**Revendications**

1. Procédé pour préparer, selon le processus de précipitation, des poudres d'enduction pigmentées avec du dioxide de titane, à base de polyamides comportant au moins dix atomes de carbone aliphatiquement, liés par groupe carboxylamide, ou de copolyamides ou d'un mélange d'homopolyamides et de copolyamides renfermant au moins 70% des motifs indiques, catactérisé par le fait que l'on utilise des pigments de dioxyde de titane ne présentant pas ou présentant un faible effet de nucléation sur la cristallisation de la polyamide, $\Delta T$ étant inférieur ou égal à 3°C

$[\Delta T = T_{max\ p} - T_o$

$T_{max\ p}$: Température maximale pendant la précipitation en présence du pigment à base de dioxyde de titane

$T_o$: Température maximale pendant la précipitation en l'absence de pigment à base de dioxyde de titane Procédé de mesure selon "Chem. Ing. Techn." *51*, 823 (1979)].

2. Procédé de préparation de poudres d'enduction selon la revendication 1, caractérisé par le fait que tout en agitant et en éliminant l'éthanol par distillation sous la pression propre, on refroidit rapidement la solution éthanolique chaude jusqu'à la limite de saturation (environ 125°C) et que, lors de la phase de refroidissement qui suit et en éliminant à nouveau l'éthanol par distillation, on établit la température de la chemise dans le même moment avec la température de la solution jusqu'à établissement de la température de précipitation dans un domaine de 90 à 113°C, de telle sorte que la température de la chemise est au maximum de 3°C de moins et que finalement, dans la phase de précipitation subséquente et en poursuivant l'élimination de l'éthanol par distillation, on maintient la solution isotherme.

3. L'utilisation des poudres d'enduction obtenues selon les revendications 1 et 2 en tant qu'agent d'enduction selon le procédé de revêtement par fusion.

**Claims**

1. A process for the preparation of titanium dioxide-pigmented powder coating compositions based on polyamides having at least ten aliphatically linked carbon atoms per carboxamide group or copolyamides or a mixture of homo- and co-polyamides, containing at least 70% of the aforementioned building blocks, by the precipitation process, characterized in that titanium dioxide pigments with or without a weak nucleating action on the polyamide crystallization are used, where $\Delta T \leq 3°C$

$[\Delta T = _{max\ p} - T_o$,

$T_{max\ p}$: maximum temperature during precipitation in the presence of $TiO_2$ pigment,

$T_o$: maximum temperature during precipitation in the absence of $TiO_2$ pigment,

method for measurement in accordance with Chem. Ing. Techn. *51*, 823 (1979)].

2. A process for the precipitation of powder coating compositions according to claim 1, characterized in that the hot solution in ethanol is rapidly cooled to the saturation limit (about 125°C) with stirring and while distilling off ethanol under autogenous pressure, and in the subsequent further cooling phase until the onset of the precipitation temperature in the region of 90 to 113°C while ethanol is further distilled off the jacket temperature is adjusted in step with the temperature of the solution in such a way that the jacket temperature is at most 3°C lower, and finally in the subsequent precipitation phase the solution is kept isothermal by further distillation of ethanol.

3. The use of the powder coating compositions obtained according to Claims 1 and 2 as coating compositions by hot melt coating processes.